# EUROPEAN PATENT APPLICATION

(11) **EP 4 033 420 A1**
(43) Date of publication of application: **27.07.2022**
(21) Application number: 22153033.0
(22) Date of filing: 24.01.2022
(51) Int. Cl.: G06Q 10/00, G07C 5/00

(54) **SYSTEM AND METHOD FOR TRACKING ENGINE AND AIRCRAFT COMPONENT DATA**

(30) Priority: 22.01.2021 US 202117156420
(71) Applicant: PRATT & WHITNEY CANADA CORP., Longueuil, Québec J4G 1A1 (CA)
(72) Inventor: LEE, Peter, (01BE5) Longueuil, J4G 1A1 (CA); O MALLEY, John, (01BE5) Longueuil, J4G 1A1 (CA); WIGNY, Robert, (01BE5) Longueuil, J4G 1A1 (CA)
(74) Representative: Dehns

(57) **Abstract**

A data tracking method (400) for an aircraft (100) having one or more engines (10) comprises reading (402), by a mobile device (120), at least one computer-readable label (108a, 108b) associated with at least one of one or more engine modules (104) of the one or more engines (10) and one or more Line Replaceable Units, LRUs, (106) of at least one of the aircraft (100) and the one or more engines (10) to obtain label information having encoded therein at least one of engine module data uniquely identifying each engine module (104) and LRU data uniquely identifying each LRU (106), extracting, on the mobile device (120), the at least one of the engine module data and the LRU data from the label information, and transmitting the at least one of the engine module data and the LRU data from the mobile device (120) to a data transmission unit (114) provided on-board the aircraft (100).

## Description

### TECHNICAL FIELD

The application relates generally to engines, and, more particularly, to tracking engine and aircraft component data.

### BACKGROUND OF THE ART

Currently, a manual data entry process (in the form of engine log book entries) is used to track engine and aircraft component data, specifically data related to engine modules, life-limited parts (LLPs), and line replaceable units (LRUs). As engine parts are replaced, the engine log book, which remains with the engine for its entire life cycle, needs to be maintained to ensure that accurate information about the engine is always available. Engine log book entries are however subject to human error when information is recorded. There is also limited information available outside of the log book to know the current configuration of engine parts directly on the aircraft.

Therefore, improvements are needed.

### SUMMARY

According to an aspect of the present invention, there is provided a data tracking method for an aircraft having one or more engines. The method comprises reading, by a mobile device, at least one computer-readable label associated with at least one of one or more engine modules of the one or more engines and one or more Line Replaceable Units (LRUs) of at least one of the aircraft and the one or more engines to obtain label information having encoded therein at least one of engine module data uniquely identifying each engine module and LRU data uniquely identifying each LRU, extracting, on the mobile device, the at least one of the engine module data and the LRU data from the label information, and transmitting the at least one of the engine module data and the LRU data from the mobile device to a data transmission unit provided on-board the aircraft.

Optionally, and in accordance with the above, the method further comprises, at the mobile device, querying a memory associated with the data transmission unit, the memory having stored therein the at least one of the engine module data and the LRU data received from the mobile device and Life Limited Part (LLP) data uniquely identifying one or more LLPs of at least one of the aircraft and the one or more engines, the data transmission unit configured to receive the LLP data from at least one engine computer.

Optionally, and in accordance with any of the above, the method further comprises, at the mobile device, querying the memory having stored therein at least one of a number of flight hours spent by each engine module on the one or more engines and a number of flight hours spent by each LRU on the at least one of the aircraft and the one or more engines, and a number of cumulative cycles spent by each LLP on the at least one of the aircraft and the one or more engines.

Optionally, and in accordance with any of the above, the method further comprises, at the mobile device, receiving at least one update to at least one of the engine module data, the LRU data, and the LLP data in response to at least one of the one or more engine modules, the one or more LRUs, and the one or more LLPs being replaced, and modifying the at least one of the engine module data, the LRU data, and the LLP data stored in the memory according to the at least one update.

Optionally, and in accordance with any of the above, the at least one computer-readable label associated with the one or more engine modules is read to obtain the label information having encoded therein the engine module data comprising at least one of a part number of each engine module, a serial number of each engine module, performance reference data indicative of at least one of an engine power delivery capability and a normalized output shaft rotational speed reference for the one or more engines, and at least one trim value for the one or more engines.

Optionally, and in accordance with any of the above, the at least one computer-readable label associated with the one or more LRUs is read to obtain the label information having encoded therein the LRU data comprising, for each LRU, at least one of a part number and a serial number.

Optionally, and in accordance with any of the above, the memory is queried to access the LLP data comprising, for each LLP, at least one of a part number, and a serial number.

Optionally, and in accordance with any of the above, the method further comprises establishing, at the mobile device, a wireless communication path with the data transmission unit, and transmitting the at least one of the engine module data and the LRU data from the mobile device to the data transmission unit over the wireless communication path.

Optionally, and in accordance with any of the above, at least one of the engine module data, the LRU data, and the LLP data is transmitted from the data transmission unit to a data processing device configured to process the at least one of the engine module data, the LRU data, and the LLP data for generating traceability information for at least one of each engine module, each LRU, and each LLP.

Optionally, and in accordance with any of the above, the computer-readable label is one of a one-dimensional linear barcode and a two-dimensional matrix code.

According to another aspect of the present invention, there is provided a data tracking system for an aircraft having one or more engines. The system comprises a processing unit and a non-transitory computer readable medium having stored thereon program code executable by the processing unit for reading at least one computer-readable label associated with at least one of one or more engine modules of the one or more engines and one or more Line Replaceable Units (LRUs) of at least one of the aircraft and the one or more engines to obtain label information having encoded therein at least one of engine module data uniquely identifying each engine module and LRU data uniquely identifying each LRU, extracting the at least one of the engine module data and the LRU data from the label information, and transmitting the at least one of the engine module data and the LRU data to a data transmission unit provided on-board the aircraft.

Optionally, and in accordance with any of the above, the program code is executable by the processing unit for querying a memory associated with the data transmission unit, the memory having stored therein the at least one of the engine module data, the LRU data, and Life Limited Part (LLP) data uniquely identifying one or more LLPs of at least one of the aircraft and the one or more engines.

Optionally, and in accordance with any of the above, the program code is executable by the processing unit for querying the memory having stored therein at least one of a number of flight hours spent by each engine module on the one or more engines and a number of flight hours spent by each LRU on the at least one of the aircraft and the one or more engines, and a number of cumulative cycles spent by each LLP on the at least one of the aircraft and the one or more engines.

Optionally, and in accordance with any of the above, the program code is executable by the processing unit for receiving at least one update to at least one of the engine module data, the LRU data, and the LLP data in response to at least one of the one or more engine modules, the one or more LRUs, and the one or more LLPs being replaced, and modifying the at least one of the engine module data, the LRU data, and the LLP data stored in the memory according to the at least one update.

Optionally, and in accordance with any of the above, the program code is executable by the processing unit for reading the at least one computer-readable label associated with the one or more engine modules to obtain the label information having encoded therein the engine module data comprising at least one of a part number of each engine module, a serial number of each engine module, performance reference data indicative of at least one of an engine power delivery capability and a normalized output shaft rotational speed reference for the one or more engines, and at least one trim value for the one or more engines.

Optionally, and in accordance with any of the above, the program code is executable by the processing unit for reading the at least one computer-readable label associated with the one or more LRUs to obtain the label information having encoded therein the LRU data comprising, for each LRU, at least one of a part number and a serial number.

Optionally, and in accordance with any of the above, the program code is executable by the processing unit for querying the memory to access the LLP data comprising, for each LLP, at least one of a part number, and a serial number.

Optionally, and in accordance with any of the above, the program code is executable by the processing unit for establishing a wireless communication path with the data transmission unit, and transmitting the at least one of the engine module data and the LRU data to the data transmission unit over the wireless communication path.

Optionally, and in accordance with any of the above, the program code is executable by the processing unit for transmitting at least one of the engine module data, the LRU data, and the LLP data from the data transmission unit to a data processing device configured to process the at least one of the engine module data, the LRU data, and the LLP data for generating traceability information for at least one of each engine module, each LRU, and each LLP.

Optionally, and in accordance with any of the above, the program code is executable by the processing unit for reading the computer-readable label comprising one of a one-dimensional linear barcode and a two-dimensional matrix code.

According to another aspect of the present invention, there is provided a non-transitory computer-readable medium having stored thereon program instructions executable by a processor for data tracking for an aircraft having at least one engine. The program instructions are configured for reading at least one computer-readable label associated with at least one of one or more engine modules of the at least one engine and one or more Line Replaceable Units (LRUs) of the at least one engine to obtain label information having encoded therein at least one of engine module data uniquely identifying each engine module and LRU data uniquely identifying each LRU, extracting the at least one of the engine module data and the LRU data from the label information, and transmitting the at least one of the engine module data and the LRU data to a data transmission unit provided on-board the aircraft.

Features of the systems, devices, and methods described herein may be used in various combinations, in accordance with the embodiments described herein.

### DESCRIPTION OF THE DRAWINGS

Reference is now made to the accompanying figures in which:
FIG. 1 is a schematic cross-sectional view of a gas turbine engine, in accordance with an illustrative embodiment;
FIG. 2 is a schematic diagram of an example embodiment of an aircraft system, in accordance with an illustrative embodiment;
FIG. 3 is a block diagram of an example computing device, in accordance with an illustrative embodiment;
FIG. 4A is a flowchart of a method for data tracking in an aircraft having an engine, in accordance with an illustrative embodiment; and
FIG. 4B is a flowchart of the step of updating data of FIG. 4A, in accordance with an illustrative embodiment.

It will be noted that throughout the appended drawings, like features are identified by like reference numerals.

### DETAILED DESCRIPTION

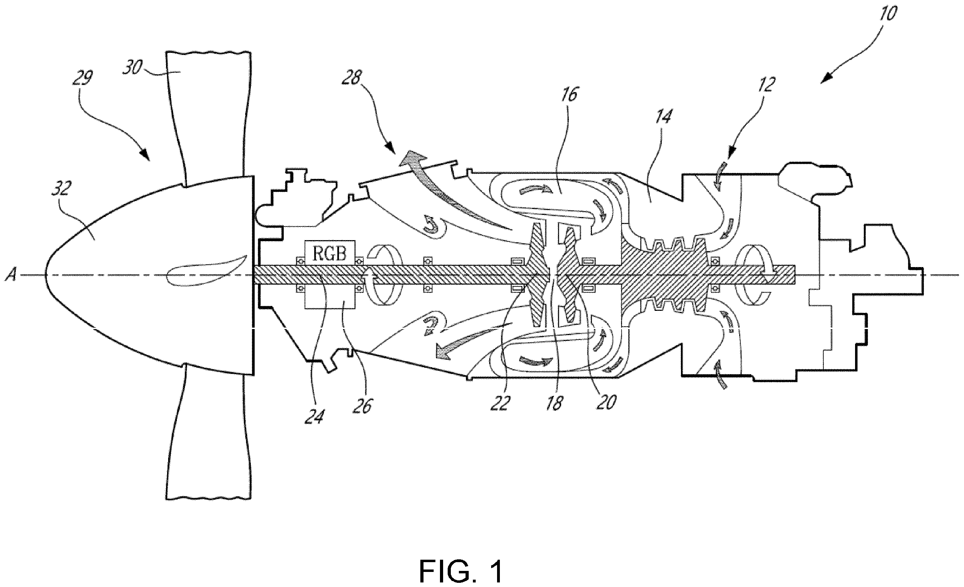

There is described herein systems and methods for tracking engine and aircraft component data. The aircraft is equipped with at least one engine, such as the exemplary engine 10 depicted in FIG. 1. In one embodiment, the engine 10 is a gas turbine engine of a type preferably provided for use in subsonic flight, generally comprising in serial flow communication an inlet 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. The turbine section 18 illustratively comprises a compressor turbine 20, which drives the compressor assembly and accessories, and at least one power or free turbine 22, which is independent from the compressor turbine 20 and drives the rotor shaft 24 through a reduction gearbox (RGB) 26. Hot gases may then be evacuated through exhaust stubs 28. Other configurations for a free turbine turboprop engine 10 may also apply.

A propeller 29 through which ambient air is propelled, is composed of a propeller hub 32 and blades 30. The propeller 29 converts rotary motion from the engine 10 to provide propulsive force to the aircraft.

The systems and methods described herein may be applied to aircraft having single or multiple (i.e., two or more) engines. Although the examples illustrated herein show a turboprop engine, it will be understood that the methods and systems described herein may be applied to other propeller-based engines, such as piston engines, electrical engines, and the like. It should also be understood that the systems and methods described herein may be applied to another type of engine, for example a turbofan engine, also generally comprising in serial flow communication a compressor section, a combustor, and a turbine section, and a fan through which ambient air is propelled, or a turboshaft engine. It should therefore be understood that the engine 110 may be any suitable aircraft propulsion system, and may include in some embodiments an all-electric propulsion system or a hybrid-electric propulsion system having a propeller driven in a hybrid architecture (series, parallel, or series/parallel) or turboelectric architecture (turboelectric or partial turboelectric).

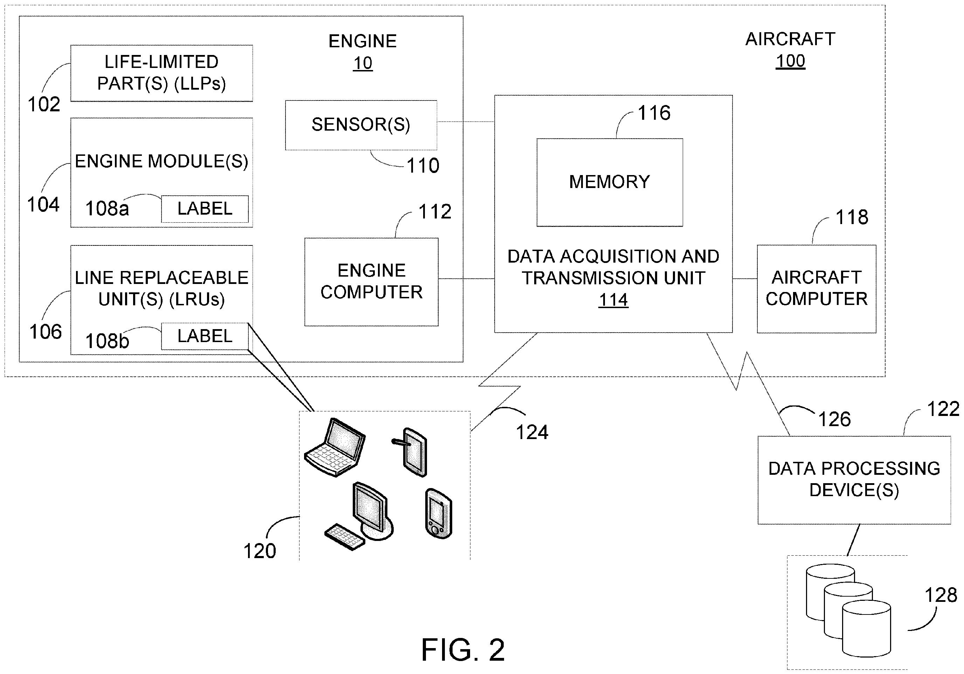

FIG. 2 illustrates an example aircraft 100 comprising the engine 10. Although reference is made herein below to a single engine 10, it should be understood that the aircraft 100 may comprise one or more engines as in 10 having different mounting positions on the aircraft 100. The systems and methods described herein may be used to track various components mounted on the engine 10 and/or the aircraft 100, with the traceability of these components being dependent on the engine mounting position on the aircraft 100.

The engine 10 illustrated in FIG. 2 comprises one or more life-limited parts (LLPs) 102, one or more engine modules 104, and one or more line replaceable units (LRUs) 106. It should however be understood that, although not illustrated, at least some LLPs 102 and LRUs 106 may be mounted on the aircraft 100 and the systems and methods described herein may also be used to track such aircraft-mounted components (which may, in some embodiments, be components not physically attached to the engine 10).

As understood by those skilled in the art, an LLP as in 102 is a part or component of the engine 10, for which a mandatory replacement limit has been set by the engine or aircraft manufacturer. The life limit may vary depending on engine configuration and usage characteristics. Since a life limit may not be exceeded under any circumstance, the life limit of a given LLP 102 is indicative of the necessity to destroy the given LLP 102 once its life limit has been reached. In one embodiment, the LLPs 102 comprise components of the compressor section 14 and/or the turbine section 18 of the engine 10. More specifically, in one embodiment, the LLPs 102 may comprise the low-pressure compressor (LPC), the high-pressure compressor (HPC), the low-pressure turbine (LPT), and the high-pressure turbine (HPT) of the engine 10. In some embodiments, the LLPs 102 may also comprise an intermediate pressure compressor (IPC) and an intermediate pressure turbine (IPT) of the engine 10, if applicable. In yet other embodiments, the LLPs 102 may comprise rotating seals and/or high pressure turbine blades. Other embodiments may apply.

The engine core, which includes the compressor section 14, the combustor 16, and the turbine section 18, may be composed of a plurality of modules adapted to be assembled together. As such, the engine modules 104 correspond to individual sections of the core of the engine 10 and may comprise a power section and a gas generator of the engine 10. In some embodiments, the engine modules 104 may comprise a gearbox module. Other embodiments may apply.

As understood by those skilled in the art, an LRU as in 106 is a modular component of the aircraft 100 or engine 10 that is designed to be removed and replaced at an operating location (also referred to as a "line") in the event of failure. In particular, LRUs may be stocked and are replaced quickly from nearby on-site inventories (i.e. at the field level), while failed or unserviceable LRUs undergo repair and overhaul actions in other locations. As such, the LRUs 106 may be removed and replaced as an aircraft line maintenance task, where maintenance can be performed on-wing. This may, for instance, alleviate the need to remove the entire engine 10 in order to get access to the part (i.e. the LRU 106 to be replaced) in a shop environment, upon disassembly. In one embodiment, the LRUs 106 comprise, but are not limited to, sensors (e.g., blade angle feedback sensors, temperature sensors such as engine inlet temperature (T1) sensors), transducers (e.g., pressure transducers such as compressor exit pressure (P3) transducers, torque pressure transducers, fuel differential pressure transducers, main oil pressure transducers), valves and detectors (e.g., flow divider and dump valve, oil-to-fuel heater, ignition exciter), control units (e.g., propeller control unit, fuel control unit, Engine Electronic Controller (EEC), Data Collection and Transmission Unit (DCTU)), and wiring harnesses (e.g., main electrical main harness, EEC wiring harness, wiring harness between DCTU and EEC).

Each engine module 104 has affixed thereto a computer-readable label 108a and each LRU 106 has affixed thereto a computer-readable label 108b. The labels 108a, 108b may be any suitable computer-readable label. In one embodiment, each label 108a, 108b is a two-dimensional matrix code, such as provided by International Standard ISO/IEC 24778, 16022, or 18004. In some embodiments, each label 108a, 108b is a Quick Response (QR) code or a data matrix code. It should however be understood that, in other embodiments, the labels 108a, 108b may be one-dimensional linear barcode , such as provided by International Standard ISO/IEC 15417, 15420, 16388, or 16390.

The labels 108a, 108b comprise label information that has encoded therein data associated with the engine module(s) 104 and the LRU(s) 106. In particular, in one embodiment, the label information of label 108a has encoded therein data (also referred to herein as "engine module data") relevant to each engine module 104. The engine module data includes, but is not limited to, one or more part identifiers (e.g., a part number, a serial number, and/or the like) for the engine module 104, performance reference data, and at least one trim value for the engine 10. In one embodiment, the performance reference data, which is included in the engine module data, indicates a specific certified engine power delivery capability and/or normalized output shaft rotational speed reference for the engine 10. In other words, the performance reference data may be indicative of a rated power setting and/or output shaft speed configuration definition of the engine 10 and/or the aircraft 100. The performance reference data may therefore comprise, but is not limited to, an engine rotational speed (NG), shaft horse power, and the like. The trim value(s) may comprise, but are not limited to, one or more of an inter-stage turbine temperature (ITT) trim value, an engine rotational speed (NG) trim value, an engine Torque (TQ) trim value, and any other suitable trim value(s). The trim value(s) may vary from engine to engine and are typically obtained during a testing phase. The trim value(s) may be determined in order to fine tune the engine performance (i.e. adjust the operation of the engine 10 with the trim value(s), also referred to as "trimming" the engine) to compensate for mechanical variations in the gas path of the engine 10.

In one embodiment, the label information of label 108b has encoded therein data (also referred to herein as "LRU data") relevant to each LRU 106. In one embodiment, the LRU data includes one or more part identifiers (e.g., a part number, a serial number, and/or the like) for the LRU 106. It should however be understood that the engine module data and the LRU data may comprise any other suitable information relevant to the engine module(s) 104 and the LRU(s) 106, information that is in turn encoded into the label information using any suitable technique. The engine 10 may then be delivered and coupled to the aircraft 100. The labels 108a, 108b may be associated with the engine 10 (i.e. attached to the engine module(s) 104 and the LRU(s) 106) in any suitable manner. For example, the engine 10 may be delivered with labels 108a, 108b being provided separate from the engine 10 (i.e. separate from the engine module(s) 104 and LRU(s) 106). It should further be understood that the label information may be provided in a human readable format, alternatively or in addition to being provided in a coded format.

The engine 10 further comprises one or more sensors 110 and an engine computer 112. The engine computer 112 may be any type of computing unit of an engine 10, such as an engine control unit (ECU), an EEC, an engine electronic control system, and a Full Authority Digital Engine Controller (FADEC). In some embodiments, the engine computer 112 may be mounted on an airframe of the aircraft 100. Alternatively, in some embodiments, the engine computer 112 may be mounted on the engine 10. The engine computer 112 is configured for controlling operation of the engine 10. The engine computer 112 controls the operation of the engine 10 based on various input parameters, such as current flight conditions, throttle lever position, ambient and engine temperatures, ambient and engine pressures, engine rotor speeds, and/or any other suitable parameter(s). More specifically, engine operating parameters, such as fuel flow, stator vane position, air bleed valve position, and/or others, are computed at least from the input parameters and applied as appropriate during operation of the engine 10.

In one embodiment, data (also referred to herein as "LLP data") relevant to each LLP 102 is stored in the engine computer 112. The LLP data may be stored in any suitable memory or storage device (not shown) of the engine computer 112. The LLP data illustratively includes, but is not limited to, one or more part identifiers (e.g., a part number, a serial number, and/or the like) for each LLP 102. In one embodiment, the LLP data may be provided (i.e. stored in the engine computer 112) at the time of manufacture (i.e. engine build prior to delivery), when the initial engine configuration details are loaded into the engine diagnostic system. In another embodiment, the LLP data may be manually entered into the engine computer 112, e.g. by way of a mobile application. The engine computer 112 is configured to provide the LLP data to an aircraft-mounted electronic device (referred to herein as a "data acquisition and transmission unit") 114, using any suitable communication means. In one embodiment, the LLP data recorded from the engine computer 112 is provided to the data acquisition and transmission unit 114 during each run of the engine 10. In one embodiment, in addition to (and in a same data stream as) the LLP data, the engine computer 112 provides to the data acquisition and transmission unit 114 cumulative cycle data indicative of the number of cumulative flight cycles spent by each LLP 102 on the engine 10. The engine computer 112 may also provide additional data to the data acquisition and transmission unit 114, such as, for instance torque, speed, rating, torque stability, propeller speed stability, and compressor speed stability of the engine 10 at any point in time during engine operation.

As also shown in FIG. 2, at least one sensor 110 may be provided per engine 10 of the aircraft 100 for collecting measurement data from the engine 10 while the aircraft 100 is in flight. The sensor(s) 110 may be mounted directly on the engine 10 and the installation may be permanent or temporary. A permanent mount may be performed during manufacture of the engine 10. When the aircraft 100 is assembled, the sensor(s) 110 may be connected to an existing aircraft harness (not shown). One or more additional cables, adapters, connectors, and/or harnesses may be added in order to connect the sensor(s) 110 to the existing aircraft harness. A temporary mount may be performed after manufacture of the engine 10 and/or after aircraft assembly, such as during aircraft maintenance.

The sensor(s) 110 may comprise, but are not limited to, speed sensor(s), accelerometer(s), phase angle sensor(s), torque sensor(s), and/or altitude meter(s). The measurement data collected by the sensor(s) 110 may be referred to as "full-flight data". As used herein, the term "full-flight data" refers to data (aircraft and engine operational data parameters) which is collected in real-time, throughout the duration of a flight of the aircraft 100, to provide a complete indication of engine performance during flight, as opposed to snapshot data, which is collected at one point in time during flight and not in real-time. The measurement data collected by the sensor(s) 110 may be transmitted to the data acquisition and transmission unit 114 over a wired connection, e.g. via the existing aircraft harness and/or additional cables, adapters, connectors, and/or harnesses. Alternatively, transmission of the data collected by the sensor(s) 110 may be performed wirelessly. Therefore, the sensor(s) 110 may be configured for providing the measurement data to the data acquisition and transmission unit 114 via any suitable wired or wireless communication path.

As used herein, the term "wired" refers to the transfer of information (or data) between two points that are electrically connected (e.g., by an electrical conductor). When reference is made herein to a wired connection (or path), it should be understood that any suitable technology may be used to establish the wired connection including, but not limited to, RS-232, USB, USB 2.0, USB 3.0, USB-C, Thunderbolt^{™}, Ethernet, and the like. As used herein, the term "wireless" refers to the transfer of information (or data) between two points that are not connected by an electrical conductor. When reference is made herein to a wireless connection (or path), it should be understood that any suitable wireless technology may be used to establish the wireless connection including, but not limited to, radio waves (e.g., VHF radio, HF radio), Bluetooth^{™}, Zigbee^{™}, Ultra-wideband (UWB), mobile broadband, wireless spread spectrum such as Wi-Fi (Standardized as IEEE 802.11 a, b, g, n, ac, ax), cellular data service, satellite communication (SATCOM), SATA, e-SATA, and the like.

In one embodiment, the data acquisition and transmission unit 114 also receives data from an aircraft computer 118. Example data provided by the aircraft computer 118 comprises airspeed, altitude, stability, and position of the aircraft 100 at any point in time during a flight. The data received from the aircraft computer 118 and the engine computer 112 will be collectively referred to herein as aircraft data, and denote engine and/or aircraft performance parameters. The aircraft computer 118 may be an aircraft management controller (AMC), a flight management system (FMS), an aircraft digital computer system, or any other device used for computing inside the aircraft 100. Data transmitted from the engine computer 112 and/or the aircraft computer 118 to the data acquisition and transmission unit 114 may be provided over a dedicated communication bus or any other existing communication system of the aircraft 100.

The data acquisition and transmission unit 114 may be any suitable communication system that is able to communicate with the engine 10 (specifically with the sensor(s) 110 and the engine computer 112) and the aircraft computer 118, as well as with one or more client devices 120 and one (or more) data processing device(s) 122 (as will be discussed further below). The data acquisition and transmission unit 114 may be configured for any suitable functionality, including, but not limited to, receiving data from the sensor(s) 110, the engine computer 112), the aircraft computer 118, and/or the client devices 120, as well as forwarding the received data to the data processing device(s) 122, as will be discussed further below.

In one embodiment, the data acquisition and transmission unit 114 is coupled to the sensor(s) 110, the engine computer 112), and/or the aircraft computer 118 and configured for wired communication therewith. The data acquisition and transmission unit 114 may communicate with the sensor(s) 110, the engine computer 112, and/or the aircraft computer 118 using a serial bus protocol over at least one wire connecting the data acquisition and transmission unit 114 to the sensor(s) 110, the engine computer 112), and/or the aircraft computer 118. Alternatively, the data acquisition and transmission unit 114 may communicate with the sensor(s) 110, the engine computer 112), and/or the aircraft computer 118 using a parallel bus protocol over a plurality of wires connecting the data acquisition and transmission unit 114 to the sensor(s) 110, the engine computer 112), and/or the aircraft computer 118. In alternative embodiments, the data acquisition and transmission unit 114 may be configured for wireless communication with the sensor(s) 110, the engine computer 112), and/or the aircraft computer 118. Other embodiments may apply.

The data acquisition and transmission unit 114 may take various forms, such as a Flight-data Acquisition, Storage, and Transmission (FAST^{™}) box or a DCTU, as manufactured by Pratt & Whitney Canada, or any other computer-controlled unit that receives data from various aircraft and engine systems and sensors. In some embodiments, the data acquisition and transmission unit 114 may be configured to store data (e.g., received from the sensor(s) 110, engine computer 112, and/or aircraft computer 118) in any suitable memory 116 or storage device.

In one embodiment, one or more client devices 120 are adapted to communicate with the data acquisition and transmission unit 114. The device(s) 120 may be any suitable portable or handheld communication device (referred to herein as a mobile device), such as a smartphone, a portable computer, a tablet, electronic flight bag or the like. Each device 120 may comprise antenna(s), transmitter(s), receiver(s), transceiver(s), processor(s), and/or any other suitable components (not shown) for communication with the data acquisition and transmission unit 114. Each device 120 is configured to connect to the data acquisition and transmission unit 114 via a communication path 124. The communication path 124 may be wireless or wired. When the communication path 124 is wireless, the wireless connection may be established upon engine start up with the aircraft 100 parked, after completion of a flight of the aircraft 100, or after engine shutdown. The device 120 may communicate with the data acquisition and transmission unit 114 directly or via one or more communication networks.

Each device 120 is configured to read the labels 108a, 108b to obtain the label information associated therewith. The device 120 is then configured to extract the engine module data and/or the LRU data from the label information. Any suitable optical scanner of the device 120 or any suitable optical scanner connected to the device 120 may be used to read the labels 108a, 108b and obtain the label information. For example, the device 120 may comprise a camera for capturing one or more images of the labels 108a, 108b to obtain the label information. The device 120 may be further configured to process the image(s) of the label information to extract the engine module data and/or the LRU data. The device 120 is also configured to transmit the engine module data and/or the LRU data, once obtained, to the data acquisition and transmission unit 114 via a communication path 124. The data acquisition and transmission unit 114 may in turn store the received data in the memory 116. In one embodiment, the device 120 is configured to enforce that a proper data format is used to enter the data to the memory 116. For this purpose, the device 120 may provide to the data acquisition and transmission unit 114 the data to be stored along with a configurable set of data filters. In one embodiment, the data filters are implemented using "regular expressions" (or regex), which, as known to those skilled in the art, are a sequence of characters that define a search pattern. The data acquisition and transmission unit 114 may then store each piece of data in the memory 116 accordingly.

In one embodiment, the engine module data and the LRU data (i.e. the part identifier(s) for each engine module 104 and LRU 106) is stored in memory 116 along with the date of entry (i.e. the date of installation of the engine module 104 and/or LRU 106 on the engine 10). In one embodiment, the duration of use (e.g., number of engine run hours) of the engine module 104 and/or LRU 106 is tracked (e.g., on the ground, by the data processing device(s) 122) and stored in the memory 116 with the engine module data and/or the LRU data, at the time of installation of the engine module 104 and/or LRU 106. In one embodiment, the memory 116 in which the engine module data and the LRU data is stored is a non-volatile memory (NVM). The data may be stored in the memory 116 using any suitable format including, but not limited to, in an Extensible Markup Language (XML) file.

In some embodiments, the client device(s) 120 may receive one or more updates to the data stored in the memory 116. The update(s) may be received, for example, when a given part (i.e. LLP 102, engine module 104, and/or LRU 106) is replaced on-wing during maintenance activities, and new LLP data, engine module data, and/or LRU data is to be stored in the memory 116 accordingly. The update(s) may be entered by a user (e.g., maintenance personnel) using a suitable user interface or other input device associated with the client device 120. Alternatively, when an engine module 104 and/or LRU 106 is replaced, the update(s) are automatically received at the client device(s) 120 upon the client device(s) 120 reading the labels 108a and/or 108b provided on the replacement part(s) and obtaining the label information associated therewith. When the one or more updates are received, the client device 120 may thus query the memory 116 to access the data stored therein and update the data in accordance with the one or more updates.

For example, an LRU 106 having a given duration of use (i.e. number of engine hours) associated with it may be replaced on the aircraft 100. As a result, the duration of use associated with the LRU 196 would need to be updated (i.e. replaced with the duration of use associated with the replacement LRU) in the memory 116 at the same time as the LRU data itself (i.e. the part identifier(s) for the LRU 106) is updated (i.e. replaced with the part identifier(s) of the replacement LRU). In this manner, accurate cumulative usage tracking may be achieved. Similarly, if an LLP 102 is replaced as part of an engine shop visit, repair or overhaul, the LLP data (i.e. the part identifier(s) as well as the cumulative flight cycles associated with the LLP 102) stored in the memory 116 needs to be updated (i.e. replaced with the part identifier(s) and the cumulative flight cycles associated with the replacement LLP) prior to engine utilization. In this manner, the additional flight cycles associated with the replacement LLP can be properly accrued as part of the engine's digital record.

When the LLP data, the engine module data and/or the LRU data is updated, the client device 120 may be further configured to capture a historical record containing the previously-stored data and the updated data, the record thus being indicative of the change. In some embodiments, the historical record may be associated with the log book of the engine 10 in order to document the change. For example, the actions taken during the maintenance activity can be printed from the client device 120 and affixed to the engine log book.

The data acquisition and transmission unit 114 is configured to communicate with the data processing device(s) 122 over a communication path 126. In one embodiment, the communication path 126 is wireless. It should however be understood that, in other embodiments, the communication path 126 may be wired. In particular, the data acquisition and transmission unit 114 is configured to provide (over the communication path 126) the data stored in the memory 116, namely the LLP data and the data received from the client device(s) 120 (i.e. the engine module data and/or the LRU data as obtained upon the client device(s) 120 reading of the labels 108a, 108b), to the data processing device(s) 122 for post-processing. In particular, in one embodiment, the data acquisition and transmission unit 114 includes the LLP data, the engine module data, and/or the LRU data with each full-flight data recording that is off-loaded to the data processing device(s) 122. In one embodiment, the data is off-loaded to the data processing device(s) 122 after each flight and after each update made through a client device 120. In particular, each time an update is made (through the client device 120) to the engine module data and the LRU data stored in the memory 116, the update is synchronized to the data processing device(s) 122. In one embodiment, the synchronization occurs when the data acquisition and transmission unit 114 establishes a wireless connection (via the communication path 126) with the data processing device(s) 122.

The data acquisition and transmission unit 114 may comprise one or more antenna and one or more processors (not shown). The one or more antenna enable establishment of the communication path 126 with the data processing device(s) 122. In some embodiments, data is transmitted to and received at the data acquisition and transmission unit 114 using the Aeronautical Radio Inc. (ARINC) 429 data transfer standard for aircraft avionics. Other data standards may also be used, such as ARINC 615, ARINC 717, and MIL-STD-1553. It should be understood that, while FIG. 2 illustrates (for clarity purposes) a single data acquisition and transmission unit 114 having both data acquisition and data transmission functionalities, more than one unit as in 114 may be provided. For example, the aircraft 100 may comprise a data acquisition unit separate from the data transmission unit.

The data processing device(s) 122 may comprise a series of servers corresponding, but not limited, to a microserver, a web server, an application server, and a database server. In one embodiment, the data processing device(s) 122 is a server provided on the ground (referred to herein as a "ground server"). It should however be understood that the methods and systems described herein may use cloud computing, such that the data processing device(s) 122 may be a cloud server. Indeed, the systems and methods described herein may support Internet of Things (loT) connectivity with a cloud data analytics platform. Distributed computing may also apply, such that the data processing device(s) 122 may comprise a set of two or more servers. Any other suitable data processing device may apply. These servers are all represented by data processing device(s) 122 in FIG. 2. In addition, it should be understood that, while the one or more data processing device(s) 122 are illustrated as being remote from the aircraft 100, the data processing device(s) 122 may, in some embodiments, be provided on-board the aircraft 100 (e.g., as part of the data acquisition and transmission unit 114).

Each data processing device 122 is configured to collect and store the engine module data, the LRU data, and/or the LLP data for all engines, such as engine 10, operating in the field. The data processing device 122 may be configured to store the received data in a data warehouse 128 communicatively coupled to the data processing device 122. The data warehouse 128 described herein may be provided as collections of data or information organized for rapid search and retrieval by a computer. It is structured to facilitate storage, retrieval, modification, and deletion of data in conjunction with various data-processing operations. The data warehouse 128 may consist of a file or sets of files that can be broken down into records, each of which consists of one or more fields. Database information may be retrieved through queries using keywords and sorting commands, in order to rapidly search, rearrange, group, and select the field. The data warehouse 128 may be any organization of data on a data storage medium, such as one or more servers. It should be understood that the data warehouse 128 may also be provided in a cloud-based server-less environment.

The data processing device 122 may then use the data from the data warehouse 128 for further processing. In one embodiment, the data processing device 122 is configured to merge the data (e.g., engine module data, LRU data, and/or LLP data) and use the merged data to run reports on engine fleets for LLP cumulative time, LRU parts, customer configurations, and the like, and accordingly generate information that provides traceability for the engine and/or aircraft components (i.e. for each engine module 104, each LRU 106, and/or each LLP 102). The traceability information generated by the data processing device 122 may then be output to one or more devices (such as the device(s) 120), using any suitable means. In particular, the data processing device 122 may use the engine module data, LLP data, and/or LRU data to track part configurations and generate upgrade campaigns targeted at a given aircraft, such as aircraft 100, for improved logistical support. In addition, the data processing device 122 may use the engine module data, LLP data, and/or LRU data in conjunction with the full-flight data (received from the data acquisition and transmission unit 114) to determine the effects of different LRUs 106 on overall engine performance and operational health. In addition, the data processing device 122 may use the engine module data, LLP data, and/or LRU data in combination with the full-flight data to calculate the cumulative on wing time for each engine part. Spare part logistical support may also be provided at the data processing device 122, knowing the engine configuration and using the engine module data, LLP data, and/or LRU data.

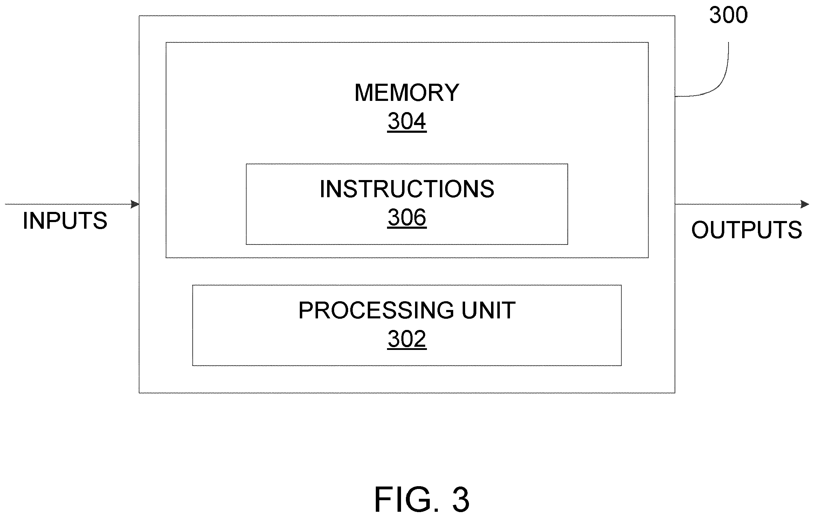

FIG. 3 is an example embodiment of a computing device 300 for implementing the engine computer 112, the data acquisition and transmission unit 114, the aircraft computer 118, the client device(s) 120 or the data processing device(s) 122 described above with reference to FIG. 2. The computing device 300 comprises a processing unit 302 and a memory 304 which has stored therein computer-executable instructions 306. The processing unit 302 may comprise any suitable devices configured to cause a series of steps to be performed such that instructions 306, when executed by the computing device 300 or other programmable apparatus, may cause the functions/acts/steps specified in the method described herein to be executed. The processing unit 302 may comprise, for example, any type of general-purpose microprocessor or microcontroller, a digital signal processing (DSP) processor, a CPU, an integrated circuit, a field programmable gate array (FPGA), a reconfigurable processor, other suitably programmed or programmable logic circuits, or any combination thereof.

The memory 304 may comprise any suitable known or other machine-readable storage medium. The memory 304 may comprise non-transitory computer readable storage medium, for example, but not limited to, an electronic, magnetic, optical, electromagnetic, infrared, or semiconductor system, apparatus, or device, or any suitable combination of the foregoing. The memory 304 may include a suitable combination of any type of computer memory that is located either internally or externally to device, for example random-access memory (RAM), read-only memory (ROM), electro-optical memory, magneto-optical memory, erasable programmable read-only memory (EPROM), and electrically-erasable programmable read-only memory (EEPROM), Ferroelectric RAM (FRAM) or the like. Memory 304 may comprise any storage means (e.g., devices) suitable for retrievably storing machine-readable instructions 306 executable by processing unit 302.

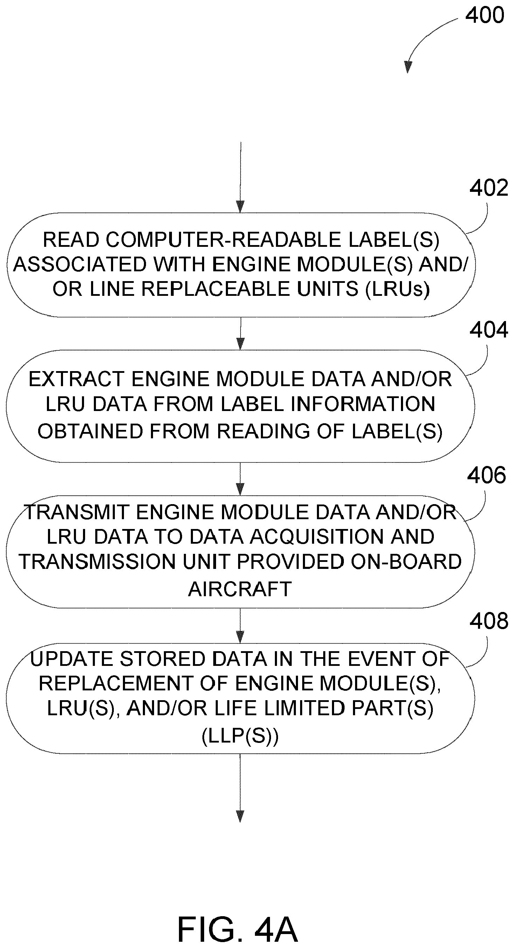

Referring now to FIG. 4A, a method 400 for data transmission in an aircraft will now be described in accordance with one embodiment. The method 400 is illustratively performed at a client device (reference 120 in FIG. 2). The method 400 comprises, at step 402, reading one or more computer-readable labels associated with one or more engine modules and/or one or more LRUs. Label information is then obtained from reading the label(s) at step 402 and engine module data and/or LRU data is extracted (step 404) from the label information. The labels may be read and the data extracted from the label information in any suitable manner, such as the manner described herein above with reference to FIG. 2. The engine module data and/or the LRU data is then transmitted (step 406) to a data acquisition and transmission unit provided on-board the aircraft, the data acquisition and transmission unit configured to store the received data in memory as well as off-load the data to at least one data processing device for subsequent processing (e.g. for traceability purposes). At step 408, the data stored in the memory of the data acquisition and transmission unit is updated in the event of replacement of the engine module(s), the LRU(s), and/or LLP(s) of the engine.

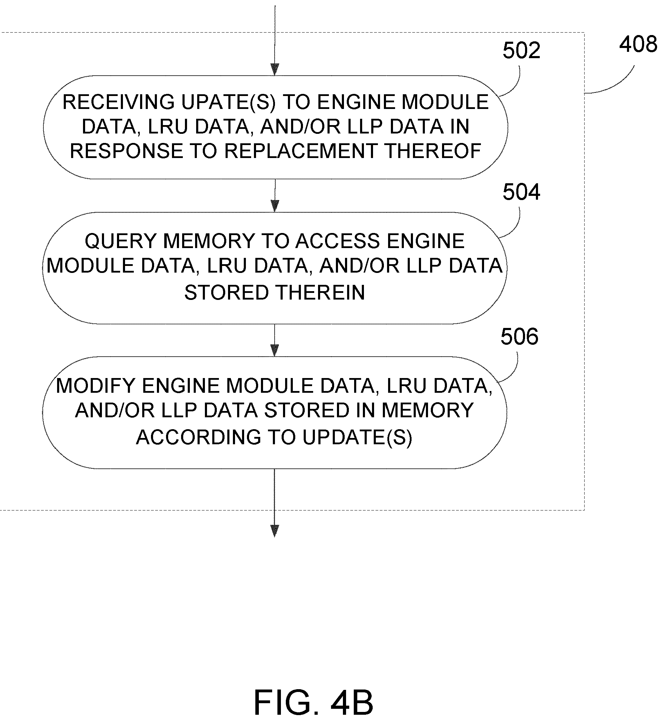

Referring now to FIG. 4B, the step 408 of updating data comprises, at step 502, receiving at least one update to the engine module data, the LRU data, and/or LLP data stored in the memory of the data acquisition and transmission unit, the LLP data provided to the data acquisition and transmission unit by an engine computer. The at least one update may be received in response to replacement of an engine component or part (i.e., replacement of engine module(s), LRU(s), and/or LLP(s)). As described herein above, the at least one update may be received by reading, using the client device, one or more computer-readable labels associated with the replacement engine modules and/or LRUs. The at least one update may also be received by a user entering information via a suitable interface of the client device. The next step 504 is then to query the memory of the data acquisition and transmission unit to access the engine module data, the LRU data, and/or LLP stored therein. The engine module data, the LRU data, and/or LLP is then modified (step 506) according to the at least one update and the updated data may be synchronized to the at least data processing device.

In one embodiment, the systems and methods described herein may enable to associate part (e.g., LRU) configuration data with engine operational data (and accordingly enable real-time tracking of parts against engine operational data), in turn allowing for automated ground processing to assist in determining the performance characteristics of engine components compared to their design objectives. In addition, the systems and methods described herein may facilitate report generation and logistical planning to determine the impact of component upgrade campaigns for in-service engines. Moreover, the systems and methods described herein may reduce the need for manual entries in the aircraft log book and may provide a method to incorporate an electronic log book for the aircraft, thus supporting tracking of the operational run time on each component installed on the engine. Indeed, through the use of a mobile device and computer-readable label scanning capability, automated update of engine module, LLP, and/or LRU data may be achieved when parts are replaced, thus reducing the impact on human error when recording the data. Since the data is synchronized with the data processing device during each update, immediate access to the engine configuration may be provided without a requirement for physical access to the paper engine log book. Put differently, through the use of a mobile application provided on the mobile device, a maintenance technician can view and edit engine system configuration data planeside, providing access to additional records not available in the log book. Also, the systems and methods described herein may allow to improve the quality of the regulatory data required for the aircraft as well as improve accuracy of component line maintenance tracking. Engine downtime may also be minimized by allowing for proactive maintenance based on data analytics (e.g., at the data processing device).

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A data tracking method (400) for an aircraft (100) having one or more engines (10), the method (400) comprising:
reading (402), by a mobile device (120), at least one computer-readable label (108a, 108b) associated with at least one of one or more engine modules (104) of the one or more engines (10) and one or more Line Replaceable Units, LRUs, (106) of at least one of the aircraft (100) and the one or more engines (10) to obtain label information having encoded therein at least one of engine module data uniquely identifying each engine module (104) and LRU data uniquely identifying each LRU (106);
extracting (404), on the mobile device (120), the at least one of the engine module data and the LRU data from the label information; and
transmitting (406) the at least one of the engine module data and the LRU data from the mobile device (120) to a data transmission unit (114) provided on-board the aircraft (100).

2. The method (400) of claim 1, further comprising, at the mobile device (120), querying a memory (116) associated with the data transmission unit (114), the memory (116) having stored therein the at least one of the engine module data and the LRU data received from the mobile device (120) and Life Limited Part, LLP, data uniquely identifying one or more LLPs (102) of at least one of the aircraft (100) and the one or more engines (10), the data transmission unit (114) configured to receive the LLP data from at least one engine computer (112).

3. The method (400) of claim 2, further comprising, at the mobile device (120), querying (504) the memory (116) having stored therein at least one of a number of flight hours spent by each engine module (104) on the one or more engines (10) and a number of flight hours spent by each LRU (106) on the at least one of the aircraft (100) and the one or more engines (10), and a number of cumulative cycles spent by each LLP (102) on the at least one of the aircraft (100) and the one or more engines (10).

4. The method (400) of claim 2 or 3, further comprising, at the mobile device (120), receiving (502) at least one update to at least one of the engine module data, the LRU data, and the LLP data in response to at least one of the one or more engine modules (104), the one or more LRUs (106), and the one or more LLPs (102) being replaced, and modifying (506) the at least one of the engine module data, the LRU data, and the LLP data stored in the memory (116) according to the at least one update.

5. The method (400) of any of claims 2 to 4, wherein the memory (116) is queried to access the LLP data comprising, for each LLP (102), at least one of a part number, and a serial number.

6. The method (400) of any of claims 2 to 5, wherein at least one of the engine module data, the LRU data, and the LLP data is transmitted from the data transmission unit (114) to a data processing device (122) configured to process the at least one of the engine module data, the LRU data, and the LLP data for generating traceability information for at least one of each engine module (104), each LRU (106), and each LLP (102).

7. The method (400) of any preceding claim, wherein the at least one computer-readable label (108a) associated with the one or more engine modules (104) is read to obtain the label information having encoded therein the engine module data comprising at least one of a part number of each engine module (104), a serial number of each engine module (104), performance reference data indicative of at least one of an engine power delivery capability and a normalized output shaft rotational speed reference for the one or more engines (10), and at least one trim value for the one or more engines (10), and/or the at least one computer-readable label (108b) associated with the one or more LRUs (106) is read to obtain the label information having encoded therein the LRU data comprising, for each LRU (106), at least one of a part number and a serial number.

8. The method (400) of any preceding claim, further comprising establishing, at the mobile device (120), a wireless communication path (124) with the data transmission unit (114), and transmitting the at least one of the engine module data and the LRU data from the mobile device (120) to the data transmission unit over the wireless communication path (124).

9. A data tracking system (300) for an aircraft (100) having one or more engines (10), the system comprising (300):
a processing unit (302); and
a non-transitory computer readable medium (304) having stored thereon program code (306) executable by the processing unit (302) for:
reading (402) at least one computer-readable label (108a, 108b) associated with at least one of one or more engine modules (104) of the one or more engines (10) and one or more Line Replaceable Units, LRUs, (106) of at least one of the aircraft (100) and the one or more engines (10) to obtain label information having encoded therein at least one of engine module data uniquely identifying each engine module (104) and LRU data uniquely identifying each LRU (106);
extracting (404) the at least one of the engine module data and the LRU data from the label information; and
transmitting (406) the at least one of the engine module data and the LRU data to a data transmission unit (114) provided on-board the aircraft (100).

10. The system (300) of claim 9, wherein the program code (306) is executable by the processing unit (302) for querying (504) a memory (116) associated with the data transmission unit (114), the memory (116) having stored therein the at least one of the engine module data, the LRU data, and Life Limited Part, LLP, data uniquely identifying one or more LLPs (102) of at least one of the aircraft (100) and the one or more engines (10).

11. The system (300) of claim 10, wherein the program code (306) is executable by the processing unit (302) for querying (504) the memory (116) having stored therein at least one of a number of flight hours spent by each engine module (104) on the one or more engines (10) and a number of flight hours spent by each LRU (106) on the at least one of the aircraft (100) and the one or more engines (10), and a number of cumulative cycles spent by each LLP (102) on the at least one of the aircraft (100) and the one or more engines (10).

12. The system (300) of claim 10 or 11, wherein the program code (306) is executable by the processing unit (302) for receiving (502) at least one update to at least one of the engine module data, the LRU data, and the LLP data in response to at least one of the one or more engine modules (104), the one or more LRUs (106), and the one or more LLPs (102) being replaced, and modifying (506) the at least one of the engine module data, the LRU data, and the LLP data stored in the memory (116) according to the at least one update.

13. The system (300) of any of claims 10 to 12, wherein the program code is executable by the processing unit for querying the memory to access the LLP data comprising, for each LLP, at least one of a part number, and a serial number.

14. The system (300) of any of claims 9 to 13, wherein the program code (306) is executable by the processing unit (302) for reading the at least one computer-readable label (108a) associated with the one or more engine modules (104) to obtain the label information having encoded therein the engine module data comprising at least one of a part number of each engine module (104), a serial number of each engine module (104), performance reference data indicative of at least one of an engine power delivery capability and a normalized output shaft rotational speed reference for the one or more engines (10), and at least one trim value for the one or more engines (10), and/or the program code is (306) executable by the processing unit (302) for reading the at least one computer-readable label (108b) associated with the one or more LRUs (106) to obtain the label information having encoded therein the LRU data comprising, for each LRU (106), at least one of a part number and a serial number.

15. The system (300) of any of claims 9 to 14, wherein the program code (306) is executable by the processing unit (302) for establishing a wireless communication path (124) with the data transmission unit (114), and transmitting the at least one of the engine module data and the LRU data to the data transmission unit (114) over the wireless communication path (124).
